# EUROPEAN PATENT APPLICATION

(11) **EP 4 764 297 A1**
(43) Date of publication of application: **24.06.2026**
(21) Application number: 25199083.4
(22) Date of filing: 29.08.2025
(51) Int. Cl.: F17C 13/08

(54) **STORAGE CONTAINER END SUPPORT DEVICE EQUIPPED WITH FASTENING MODULE**

(30) Priority: 20.12.2024 KR 20240193056
(71) Applicant: Duksan Aetherct Co,. Ltd., Busan 46751 (KR)
(72) Inventor: WEE, Ho Sun, 46751 Gangseo-gu, Busan (KR); JEON, Sang Jin, 46751 Gangseo-gu, Busan (KR); LEE, Sung Hwan, 46751 Gangseo-gu, Busan (KR); KANG, Ji Hoon, 46751 Gangseo-gu, Busan (KR)
(74) Representative: TRBL Intellectual Property

(57) **Abstract**

The present disclosure relates to a storage container end support device including: a storage container having a nozzle part adapted to flow a gas therein and thereout of; a base module adapted to support the storage container in such a way as to allow the storage container to communicate with a flow path formed therein if the storage container slides in one direction; and a fastening module located inside the base module in such a way as to allow the storage container to slide in one direction, so that if the storage container escapes from the base module, the fastening module slides in the opposite direction to one direction.

## Description

### FIELD OF THE DISCLOSURE

The present disclosure relates to a storage container end support device equipped with a fastening module, more particularly to a storage container end support device equipped with a fastening module that is capable of allowing a storage container to be stably supported against a bottom thereof through the fastening module if the storage container slides in one direction.

### BACKGROUND OF THE RELATED ART

A storage container for storing a high-pressure gas is a container in which a gas such as hydrogen is compressed and stored, and in existing technologies, a variety of structural parts are needed to fix the storage container to transportation means such as vehicles and the like are needed.

For example, the structural parts may include a frame for supporting the underside of the storage container or surrounding the entire surface of the storage container and straps for fixing the storage container to the frame, and if it is desired to use a plurality of storage containers together, additional processes of fixing the nozzles of the storage containers to one another are needed.

Under the above-mentioned configuration, however, the high-pressure gas storage container support device has the following problems. Firstly, the number of parts for fixing the storage container to the support device increases to thus extend the coupling time of the parts, thereby causing a low level of productivity. Secondly, if abnormality in the internal pressure of the storage container occurs, it is difficult to find the abnormality immediately. Lastly, the storage container has to be removed inconveniently from the frame to solve such a problem.

To solve such problems occurring in conventional technologies, therefore, there is a need to develop a storage container support device capable of fixing a storage container thereto easily, finding abnormality in the internal pressure of the storage container immediately, and solving the abnormality, so that through a plurality of such storage container support devices, a plurality of such storage containers is transported or stored in an efficient and stable way.

The background of the present disclosure is introduced in Korean Patent No. 10-2507699.

### SUMMARY OF THE DISCLOSURE

Accordingly, the present disclosure has been made in view of the above-mentioned problems occurring in the related art, and it is an object of the present disclosure to provide a storage container end support device equipped with a fastening module that is capable of allowing a high-pressure gas storage container to be fixed thereto in a simple and efficiency way so that a plurality of such high-pressure gas storage containers are fixed to a plurality of such storage container support devices in such a simple and efficiency way.

It is another object of the present disclosure to provide a storage container end support device equipped with a fastening module that is capable of allowing a storage container to be stably fixed thereto, thereby effectively suppressing vibrations or impacts occurring while the storage container is being transferred or used.

It is yet another object of the present disclosure to provide a storage container end support device equipped with a fastening module that is capable of allowing the abnormality in the pressure occurring in the interior of a storage container to be found immediately, thereby solving the corresponding problem.

To accomplish the above-mentioned objects, according to the present disclosure, there is provided a storage container end support device including: a storage container having a nozzle part adapted to flow a gas therein and thereout of; a base module adapted to support the storage container in such a way as to allow the storage container to communicate with a flow path formed therein if the storage container slides in one direction; and a fastening module located inside the base module in such a way as to allow the storage container to slide in one direction, so that if the storage container escapes from the base module, the fastening module slides in the opposite direction to one direction.

According to the present disclosure, desirably, the fastening module may include: sliding parts slidable toward the internal space of the base module; and support parts extending from the sliding parts in such a way as to come into close contact with the storage container.

According to the present disclosure, desirably, if the storage container slides, the support parts may be adjustable in length in the same direction as the sliding direction of the storage container.

According to the present disclosure, desirably, each support part may include: a base member protruding from top of the corresponding sliding part; a length adjustment member inserted into the interior of the base member by means of the load of the storage container; and an elastic member for applying a restoring force to the length adjustment member inserted into the interior of the base member.

According to the present disclosure, desirably, the base module may include: a gas emission flow path for providing a path through which the gas of the storage container is emitted; and a main flow path extending from the gas emission flow path to provide a path through which the gas moves.

According to the present disclosure, desirably, the main flow path may include a blocking part for controlling the opening and closing thereof according to a degree of sliding of the storage container toward the base module.

According to the present disclosure, desirably, 7 the fastening module may include: a nozzle magnetic material located on the outer surface of the nozzle part; and a fastening magnetic material located on the outside of the flow path formed in the base module to provide a magnetic force for the nozzle magnetic material.

According to the present disclosure, desirably, the fastening module may include an emission valve for controlling an amount of gas emitted from the nozzle part toward the flow path formed in the base module.

All the terms and embodiments described anywhere in this document are equally applicable to all aspects of the invention. It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice.

### DESCRIPTION OF THE DRAWINGS

The above and other objects, features and advantages of the present disclosure will be apparent from the following detailed description of the embodiments of the disclosure in conjunction with the accompanying drawings, in which:
Figures 1a, 1b and 1c are perspective views showing a process in which a storage container end support device equipped with a fastening module according to the present disclosure supportedly fixes the end of a storage container thereto.
Figure 2 is a sectional view showing the storage container end support device according to the present disclosure.
Figures 3a and 3b are sectional views showing a first example of a blocking part of the storage container end support device according to the present disclosure.
Figures 4a and 4b are sectional views showing a second example of the blocking part of the storage container end support device according to the present disclosure.
Figures 5a and 5b are sectional views showing a third example of the blocking part of the storage container end support device according to the present disclosure.

### Numerical references used in the drawings

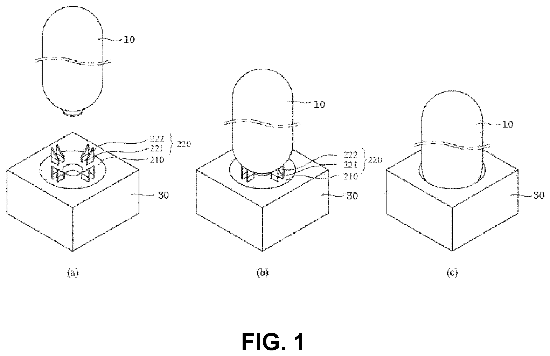

In order to provide a better understanding of the technical features of the invention, the referred Figures 1-5 are accompanied of a series of numerical references which, with an illustrative and non-limiting character, are hereby represented:

| | |
|---|---|
| 10 | Storage container |
| 11 | Nozzle part |
| 20 | Fastening module |
| 30 | Base module |
| 210 | Sliding parts |
| 220 | Support parts |
| 221 | Base member of the support part |
| 222 | Length adjustment member of the support part |
| 231 | Nozzle magnetic material of the fastening module |
| 232 | Fastening magnetic material of the fastening module |
| 300 | Gas flow path of the base module |
| 310 | Gas emission flow path of the gas flow path |
| 320 | Main flow path of the gas flow path |
| 330 | Main valves |
| 340 | Blocking part of the gas flow path |
| 341 | Blocking member of the blocking part |
| 342 | Opening member of the blocking part |

### DETAILED DESCRIPTION OF THE INVENTION

The detailed description below refers to the accompanying drawings, which illustrate specific embodiments in which the present invention may be implemented. These embodiments will be described in detail sufficient to enable those skilled in the art to implement the present invention. It should be understood that various embodiments of the present invention are different from each other but need not be mutually exclusive. Accordingly, the detailed description to be described below is not intended to be taken in a limiting meaning, and the scope of the present invention, if properly described, is limited only by the appended claims, in addition to all scopes equivalent to those claimed by the appended claims. In the drawings, reference numerals refer to the same or similar functions over several aspects.

Hereinafter, example embodiments will be described with reference to the accompanying drawings; however, for reference numerals, with respect to the same elements, even though they may be displayed in different drawings, such elements use same reference numerals as much as possible.

Also, in explaining the example embodiments, detailed description on known elements or functions will be omitted if it is determined that such description will interfere with understanding of the embodiments. In addition, the example embodiments may be embodied in different forms and should not be construed as limited to the embodiments set forth herein but may be modified and variously implemented by those skilled in the art.

Terms used in this application are used to only describe specific exemplary embodiments and are not intended to restrict the present disclosure. An expression referencing a singular value additionally refers to a corresponding expression of the plural number, unless explicitly limited otherwise by the context.

In this application, terms, such as "comprise", "include", or "have", are intended to designate those characteristics, numbers, steps, operations, elements, or parts which are described in the specification, or any combination of them that exist, and it should be understood that they do not preclude the possibility of the existence or possible addition of one or more characteristics, numbers, steps, operations, elements, or parts, or combinations thereof.

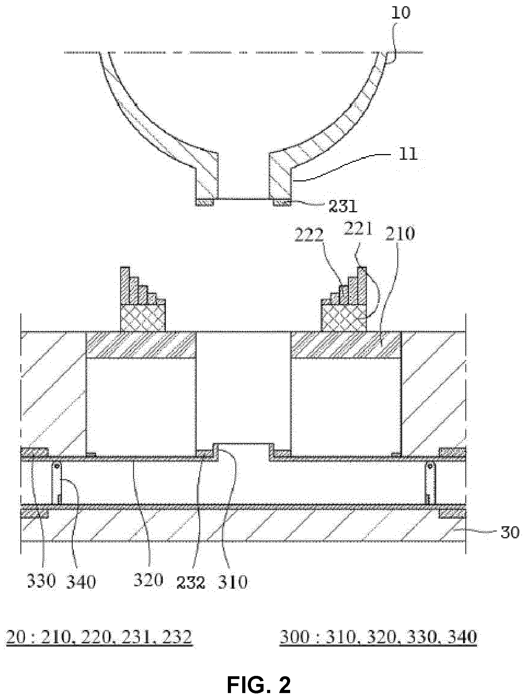

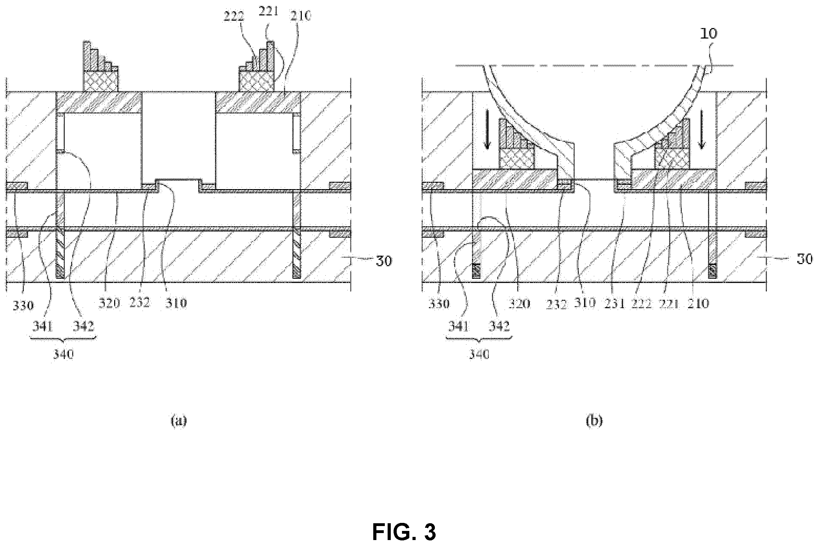

The present disclosure will be made with reference to Figs. 1a to 5b. Figs. 1a to 1c are perspective views showing a process in which a storage container end support device equipped with a fastening module according to the present disclosure supportedly fixes the end of a storage container thereto, and Fig. 2 is a sectional view showing the storage container end support device according to the present disclosure. Figs. 3a to 5b are sectional views showing first to third examples of blocking parts of the storage container end support device according to the present disclosure.

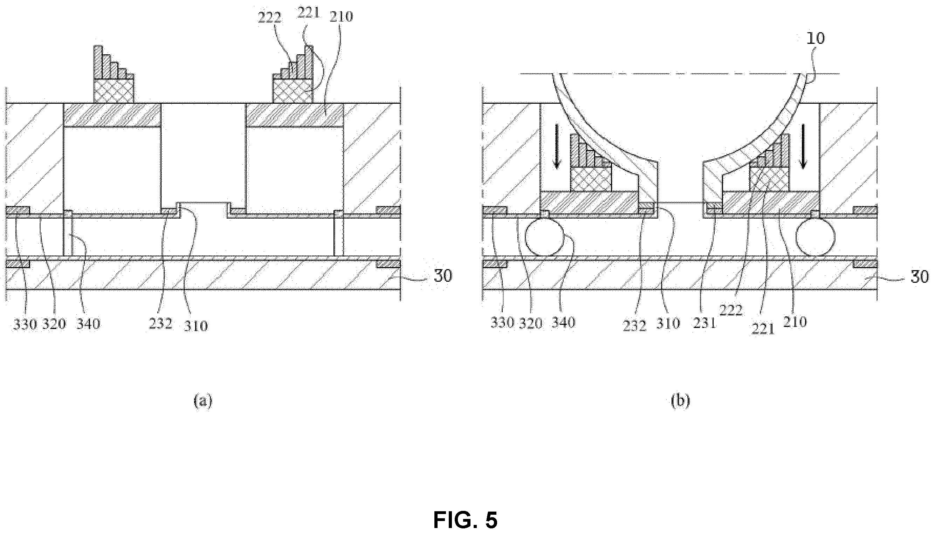

Referring to Figs. 1a to 5b, a storage container end support device according to the present disclosure largely includes a storage container 10, a base module 30, and a fastening module 20.

According to the present disclosure, the storage container 10 has a nozzle part 11 adapted to flow a gas therein and thereout of and stores the gas flowing therein through the nozzle part 11. The gas may be a high-pressure gas for commercial transportation, such as hydrogen, nitrogen, and the like.

According to the present disclosure, the base module 30 serves to support the storage container 10 in such a way as to allow the storage container 10 to communicate with a flow path formed therein if the storage container 10 slides in one direction.

If the storage container 10 slides in a direction toward the bottom of the base module 30 by means of the gravity of the storage container 10, the base module 30 allows the nozzle part 11 of the storage container 10 to communicate with the flow path formed therein, so that the gas can easily flow in and out of the storage container 10, without any detachment of the storage container 10 from the support device of the present disclosure.

According to the present disclosure, the fastening module 20 is located inside the base module 30 in such a way as to allow the storage container 10 to slide in one direction, so that if the storage container 10 escapes from the base module 30, the fastening module 20 can slide in the opposite direction to one direction.

If the storage container 10 moves in the opposite direction to the direction toward the bottom of the base module 30, the fastening module 20 can slide in the same direction as the storage container 10.

In detail, the fastening module 20 includes sliding parts 210 and support parts 220.

The sliding parts 210 are slidable toward the internal space of the base module 30, and the support parts 220 extend from the sliding parts 210 in such a way as to come into close contact with the storage container 10.

The sliding parts 210 are a plurality of arch-shaped segmented parts that are coupled to one another in the form of a circle in such a way as to have the same axis as the storage container 10.

If the storage container 10 slides, the support parts 220 are adjustable in length in the same direction as the sliding direction of the storage container 10.

To allow the support parts 220 to be adjusted in length, in detail, each support part 220 has a base member 221 protruding upward from top of the corresponding sliding part 210, a length adjustment member 222 inserted into the interior of the base member 221 by means of the load of the storage container 10, and an elastic member (not shown) for applying a restoring force to the length adjustment member 222 inserted into the interior of the base member 221.

The length adjustment member 222 is dividedly formed to allow degrees of insertion into the interior of the base member 221 to be differently adjusted according to the curved surface of the storage container 10, thereby stably fastening various types of storage containers to the support device of the present disclosure by means of the fastening module 20.

According to the present disclosure, the base module 30 has a gas flow path 300 formed therein, and the gas flow path 300 includes a gas emission flow path 310 and a main flow path 320. The gas flow path 300 is the same as the above-mentioned flow path.

The gas emission flow path 310 is a path through which the gas of the storage container 10 is emitted, and the main flow path 320 extends from the gas emission flow path 310 and provides a path through which the gas emitted from the storage container 10 through the gas emission flow path 310 moves.

In this case, main valves 330 are located on both ends of the main flow path 320 to control the opening and closing of the main flow path 320.

According to the present disclosure, the storage container support device is configured to allow the base module 30 to be coupled to the base modules 30 of the storage container end support devices of the present disclosure, so that a plurality of such storage container end support devices can support a plurality of such storage containers 10 thereagainst.

In this case, the main flow paths 320 communicate with one another by means of the base modules 30 coupled to one another, and the main flow paths 320 are controlled in the flow of gas by means of the main valves 330.

According to the present disclosure, further, the gas flow path 300 may include a check valve (not shown) adapted to flow the gas in one direction.

In detail, the check valve is located at a position where the gas emitted from the storage container 10 is introduced into the main flow path 320 from the gas emission flow path 310, thereby preventing the gas from flowing back into the storage container 10.

Further, the gas flow path 300 includes a blocking part 340 for controlling the opening and closing of the main flow path 320 according to a degree of sliding of the storage container 10 toward the base module 30.

If the storage container 10 is not supported against the base module 30, the blocking part 340 blocks the main flow path 320, and if the sliding parts 210 move along the inner peripheral surface of a hole formed on the base module 30 toward the main flow path 320, the blocking part 340 opens the main flow path 320.

As shown in Figs. 3A and 3B, in detail, the blocking part 340 includes a blocking member 341 located inside the main flow path 320 to block the flow of gas of the main flow path 320 and an opening member 342 for replacing the blocking member 341 if the sliding parts 210 move toward the main flow path 320.

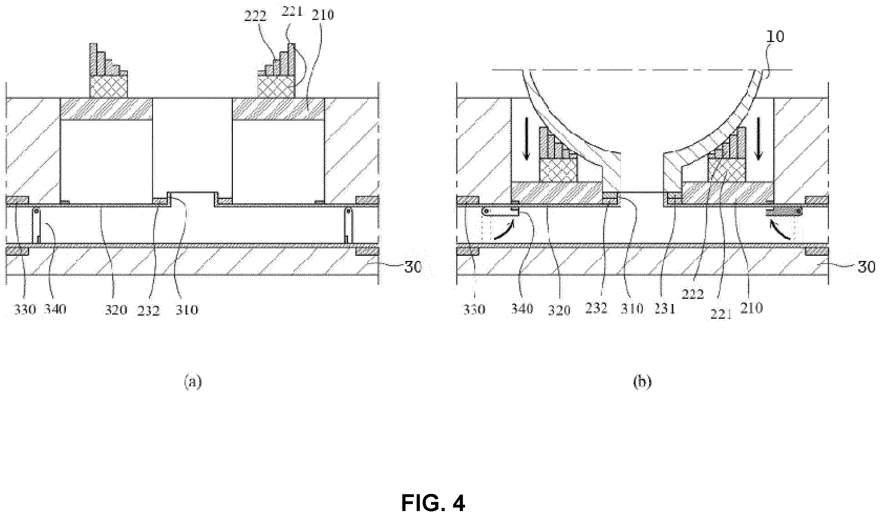

As shown in Figs. 4A and 4B, otherwise, the blocking part 340 is located inside the main flow path 320 to block the flow of gas of the main flow path 320, and in this case, if the sliding parts 210 move toward the main flow path 320, the blocking part 340 rotates by means of magnetic materials disposed in the sliding parts 210 and thus opens the main flow path 320.

As shown in Figs. 5A and 5B, otherwise, the blocking part 340 is located inside the main flow path 320 to block the flow of gas of the main flow path 320, and in this case, if the sliding parts 210 move toward the main flow path 320, the blocking part 340 rotates by means of the pressing pressure of the sliding parts 210 and thus opens the main flow path 320.

Further, the fastening module 20 includes a nozzle magnetic material 231 and a fastening magnetic material 232. The nozzle magnetic material 231 is located on the outer surface of the nozzle part 11, and the fastening magnetic material 232 is located on the flow path formed in the base module 30, that is, on the outer surface of the gas emission flow path 310 to provide a magnetic force for the nozzle magnetic material 231.

As a result, the nozzle magnetic material 231 and the fastening magnetic material 232 suggest a guideline for coupling the nozzle part 11 of the storage container 10 to the gas emission flow path 310, and further, they enhance a coupling force between the nozzle part 11 and the gas emission flow path 310.

Further, the fastening module 20 includes an emission valve for controlling an amount of gas emitted from the nozzle part 11 toward the flow path formed in the base module 30.

The gas flow path 300 includes an indicator path (not shown) branched from the gas emission flow path 310 to provide a path for emitting the gas to the outside of the base module 30 and an indicator member (not shown) located on the end of the indicator path to sense abnormal pressure of the storage container 10.

If the gas supplied from the indicator path has pressure greater than predetermined pressure, the indicator member expands or emits light to notify such an abnormal pressure in the gas of the storage container 10.

As described above, the storage container end support device according to the present disclosure has the following advantages.

Firstly, a plurality of such high-pressure gas storage containers is fixed to a plurality of such storage container end support devices in a simple and efficiency way, thereby reducing the coupling time and ensuring a high level of productivity.

Secondly, the storage container is stably fixed to the support device, thereby effectively suppressing vibrations or impacts occurring while the storage container is being transported or used.

Lastly, the abnormality in the pressure occurring in the interior of the storage container is found immediately, thereby solving the corresponding problem to enhance the efficiency in maintenance thereof.

While the present disclosure has been described with reference to the particular illustrative embodiments, it is not to be restricted by the embodiments but only by the appended claims. It is to be appreciated that those skilled in the art can change or modify the embodiments without departing from the scope and spirit of the present disclosure.

## Claims

1. - A storage container end support device comprising:
a storage container (10) having a nozzle part (11) adapted to flow gas therein and thereout of;
a base module (30) adapted to support the storage container in such a way as to
allow the storage container (10) to communicate with a flow path formed therein if the storage container slides in one direction; and
a fastening module (20) located inside the base module (30) in such a way as to allow the storage container (10) to slide in one direction, so that if the storage container (10) escapes from the base module (30), the fastening module (20) slides in the opposite direction to one direction.

2. - The storage container end support device according to claim 1, wherein the fastening module (20) comprises:
sliding parts (210) slidable toward the internal space of the base module; and
support parts (220) extending from the sliding parts in such a way as to come into close contact with the storage container (10).

3. - The storage container end support device according to claim 2, wherein if the storage container (10) slides, the support parts (220) are adjustable in length in the same direction as the sliding direction of the storage container (10).

4. - The storage container end support device according to claim 3, wherein each support part (220) comprises:
a base member (221) protruding upward from top of the corresponding sliding part (210);
a length adjustment member (222) inserted into the interior of the base member (221) by means of the load of the storage container (10); and
an elastic member for applying a restoring force to the length adjustment member (222) inserted into the interior of the base member (221).

5. - The storage container end support device according to claim 1, wherein the base module (30) comprises:
a gas emission flow path (310) for providing a path through which the gas of the storage container is emitted; and
a main flow path (320) extending from the gas emission flow path (310) to provide a path through which the gas moves.

6. - The storage container end support device according to claim 5, wherein the main flow path (300) comprises a blocking part (340) for controlling the opening and closing thereof according to a degree of sliding of the storage container (10) toward the base module.

7. - The storage container end support device according to claim 1, wherein the fastening module (20) comprises:
a nozzle magnetic material (231) located on the outer surface of the nozzle part (11); and
a fastening magnetic material (232) located on the outside of the flow path formed in the base module (30) to provide a magnetic force for the nozzle magnetic material (231).

8. - The storage container end support device according to claim 7, wherein the fastening module (20) comprises an emission valve for controlling an amount of gas emitted from the nozzle part (11) toward the flow path formed in the base module (30).
